# EUROPEAN PATENT APPLICATION

(11) **EP 4 845 164 A2**
(43) Date of publication of application: **25.11.2026**
(21) Application number: 26210479.7
(22) Date of filing: 04.04.2024
(51) Int. Cl.: H04N 21/84

(54) **STABILIZATION OF RENDERING WITH VARYING DETAIL**

(30) Priority: 06.04.2023 US 202363457490 P
(62) Document number(s) of the earlier application(s) in accordance with Art. 76 EPC: 24717652.2 / 4 690 190
(71) Applicant: Telefonaktiebolaget LM Ericsson (publ), 164 83 Stockholm (SE)
(72) Inventor: Demir Kanik, Sumeyra Ummuhan, 16480 Stockholm (SE); Norvell, Erik, 16480 Stockholm (SE)
(74) Representative: Ericsson

(57) **Abstract**

A method of decoding encoded metadata, wherein the metadata has one of a first level of detail and a second level of detail. The method comprises receiving a first parameter indicating a level of detail of the received metadata for a current frame, incrementing a metadata change counter responsive to a metadata active state variable not being set to an initial state and not being set to the level of detail indicated by the first parameter, and using metadata from a memory as the metadata to be used in rendering the current frame responsive to the incremented metadata change counter not having reached a threshold. The method comprises responsive to the incremented metadata change counter having reached the threshold setting the metadata change counter to zero and setting the metadata active state variable to the level of detail indicated by the first parameter, and decoding metadata for the current frame.

## Description

### TECHNICAL FIELD

The present disclosure relates generally to communications, and more particularly to encoding and decoding methods and related devices and nodes supporting encoding and decoding.

### BACKGROUND

Virtual reality or extended reality has become commonplace in online games and has also gained traction in social media. The reproduction of a virtual scene is referred to as a rendering process and involves creating a representation of the scene including sound, vision and in some cases also tactile feedback such as force-feedback. The quality of the rendering not only depends on the rendering technology, but also on the representation of the scene. For the audio rendering, the scene may be described using the sound signal emitted from different sources, along with the descriptions of the sources or objects, e.g., orientation, location, width, etc. Such a description is often referred to as a spatial audio object representation. The parameters accompanying the sound signal may be referred to as the metadata of the object.

In a communication scenario, the sound and metadata need to be encoded to be transmitted over a network, such as a cellular network. The connection properties may set certain constraints on the quality of the transmission, meaning that the available bandwidth needs to adapt to the transmission properties.

### SUMMARY

There currently exist certain challenge(s). In the communication field, the network transmission properties are subject to change as a result of varying conditions. In the event of varying channel conditions, the resolution of the sound and the metadata can vary with time. In particular considering the metadata, the scene may exhibit abrupt changes due to the abrupt changes in the metadata.
Certain aspects of the disclosure and their embodiments may provide solutions to these or other challenges. In various embodiments, a hysteresis scheme is provided to handle the varying metadata resolution in the decoder and renderer. The various embodiments aim to avoid abrupt changes in the resulting experience in the case of fluctuating conditions by introducing a few conditions based on the changes in the level of detail for metadata states and adjusting the relevant parameters accordingly for the occurring changes.

Some embodiments provide a method of decoding encoded metadata received in a bitstream, wherein the metadata has one of a first level of detail comprising common metadata and a second level of detail comprising extended metadata, the common metadata being a subset of the extended metadata. The method comprises receiving in the bitstream a first parameter indicating a level of detail of the received metadata for a current frame, incrementing a metadata change counter responsive to a metadata active state variable not being set to an initial state and not being set to the level of detail indicated by the first parameter, and using metadata from a memory as the metadata to be used in rendering the current frame responsive to the incremented metadata change counter not having reached a threshold. The method comprises, responsive to the incremented metadata change counter having reached the threshold, setting the metadata change counter to zero, setting the metadata active state variable to the level of detail indicated by the first parameter, and decoding metadata for the current frame in accordance with the level of detail indicated by the first parameter as the metadata to be used in rendering the current frame.

The method may further include, responsive to determining that the metadata active state variable state is set to the initial state or is set to the metadata level of detail of the received frame, setting the metadata change counter to zero, setting the metadata active state variable state to the metadata level of the received frame, decoding the metadata of the received frame to use as the obtained metadata, and rendering the received frame using the obtained metadata.

Decoding the metadata may include decoding basic metadata as a first part of the obtained metadata, responsive to a first parameter flag being set, decoding the extended metadata to use as a second part of the obtained metadata, and responsive to the first parameter flag not being set, resetting the extended metadata to use as a second part of the obtained metadata.

Using the metadata from memory may further include decoding basic metadata as a first part of the obtained metadata, and using extended metadata from memory as a second part of the obtained metadata.

The method may further include, when the metadata has been determined to be used as the obtained metadata for rendering the received frame, storing the metadata in memory for decoding and rendering subsequent frames.

The method may further include, at a beginning of decoding the bitstream, initializing each metadata parameter to a default value, and storing the initialized metadata parameters in memory.

Storing the initialized metadata parameters may include storing only extended metadata parameters. Initializing each metadata parameter may include setting each metadata parameter in accordance with: $\left\{\begin{matrix}θ = 0 \\ ϕ = 0 \\ r = 1 \\ yaw = 0 \\ pitch = 0\end{matrix}\right.$ where *θ* is azimuth, *ϕ* is elevation, *r* is a radius from an origin, *yaw* is a horizontal orientation of a source, and *pitch* is a vertical orientation of the source.

The method may further include, at a beginning of a decoding process, setting and storing a level of detail of metadata in the metadata active state variable to an initial state.

The maximum change count may include a maximum change count over a period of time. In some embodiments, the maximum change count may include a change count of 5 over the period of time.

The method may further include storing the last metadata used by an audio renderer in rendering frames of the bitstream, and performing a smooth transition from the last metadata to current metadata being used. Performing the smooth transition may include applying the smoothing transition of a rendering parameter that is an intermediate step of rendering.

The rendering parameter may include a gain parameter calculated from an orientation and distance of an audio object relative to a listener.

The level of detail may indicate whether or not extended metadata is present in the frame.

The first parameter may include a EXT_MD_BS parameter, wherein the metadata state active variable includes a EXT_MD_ACTIVE variable, and wherein the metadata change counter includes a EXT_MD_COUNTER counter.

Certain embodiments may provide one or more of the following technical advantage(s). Various embodiments described herein can achieve resolving the unwanted effects of switches in the rendered scene because of the changes in the network transition conditions. The characteristics of the previous scene are kept and updated based on the duration of the changes in the conditions to avoid constant switches in the event of shorter periods of shifts during transmission.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
**Figure 1** is a block diagram of an example of an operating environment for the various embodiments;
**Figure 2** is a block diagram of a decoder according to some embodiments;
**Figure 3** is a block diagram of a metadata decoder of the decoder of **Figure 2** capable of handling varying level of detail in the metadata, potentially as a result of varying bit rate, according to some embodiments;
**Figures 4-6** are flow charts illustrating operations of a decoder according to some embodiments;
**Figure 7** is an illustration an example case for the changes in the level of detail for metadata during transmission;
**Figures 8-9** are flow charts illustrating operations of a decoder according to some embodiments;
**Figure 10** is a block diagram of a decoder in accordance with some embodiments;
**Figure 11** is a block diagram of a host computer communicating with an encoder and/or a decoder in accordance with some embodiments; and
**Figure 12** is a block diagram of a virtualization environment in accordance with some embodiments.

### DETAILED DESCRIPTION

Some of the embodiments contemplated herein will now be described more fully with reference to the accompanying drawings. Embodiments are provided by way of example to convey the scope of the subject matter to those skilled in the art, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

As previously indicated, the network transmission properties are subject to change as a result of varying conditions. In the event of varying channel conditions, the resolution of the sound and the metadata may vary with time. In particular considering the metadata, the scene may exhibit abrupt changes due to the abrupt changes in the metadata. The various embodiments described below provide a hysteresis scheme for a decoder / renderer to handle the varying metadata resolution. The solution aims to avoid abrupt changes in the resulting experience in the case of fluctuating conditions by introducing a few conditions based on the changes in the level of detail for metadata states and adjusting the relevant parameters accordingly for the occurring changes. In some of these various embodiments, the hysteresis logic delays the change of the rendering until enough observations of a new level of detail has been observed, and enables using parameters stored in memory while receiving metadata of the detail level that is currently not used.

The use of the hysteresis in the various embodiments can resolve the unwanted effects of switches in the rendered scene because of the changes in the network transmission conditions. The characteristics of the previous scene are kept and updated based on the duration of the changes in the conditions to avoid constant switches in the event of shorter periods of shifts during transmission.

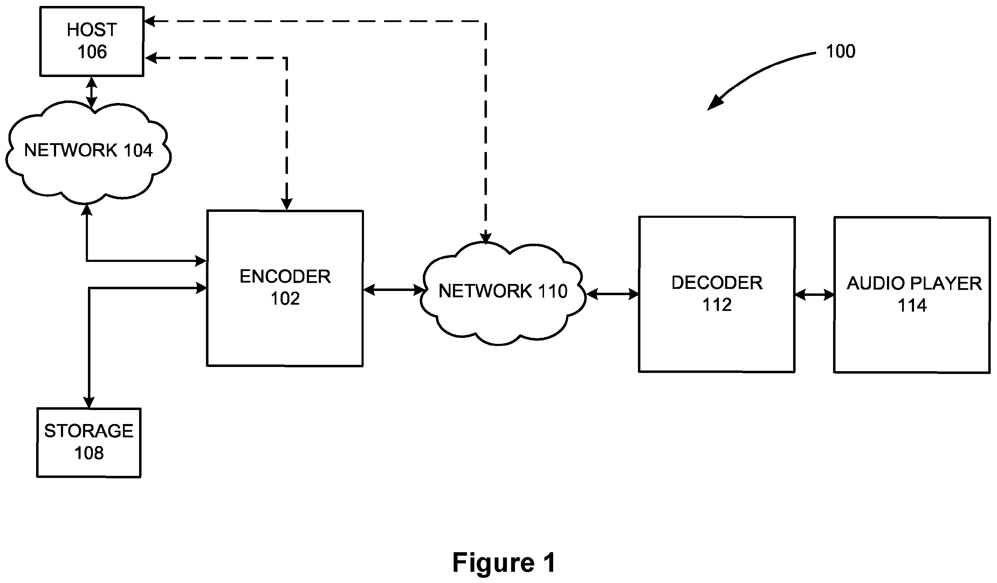

Prior to describing the various embodiments, an operating environment in which the various embodiments may be implemented shall be described. **Figure 1** illustrates an example of an operating environment in which the various embodiments of the present disclosure may be implemented. Turning to **Figure 1**, in the example operating environment 100, the encoder 102 receives data, such as an audio file and in some cases metadata, to be encoded from an entity through network 104, such as a host 106, and/or from storage 108. In some embodiments, the host 106 may communicate directly to the encoder 102. The encoder 102 encodes the audio file as well as the scene description via metadata and either stores the encoded information in storage 108 or transmits the encoded audio file to a decoder 112 via network 110. The decoder 112 decodes the audio file and the scene description in the metadata and transmits the decoded audio file to an audio player 114 for playback. The audio player 114 may be or be comprised in a user equipment, a terminal, a mobile phone, and the like. In other embodiments, the host 106 may transmit encoded audio files to the decoder 112 via network 110.

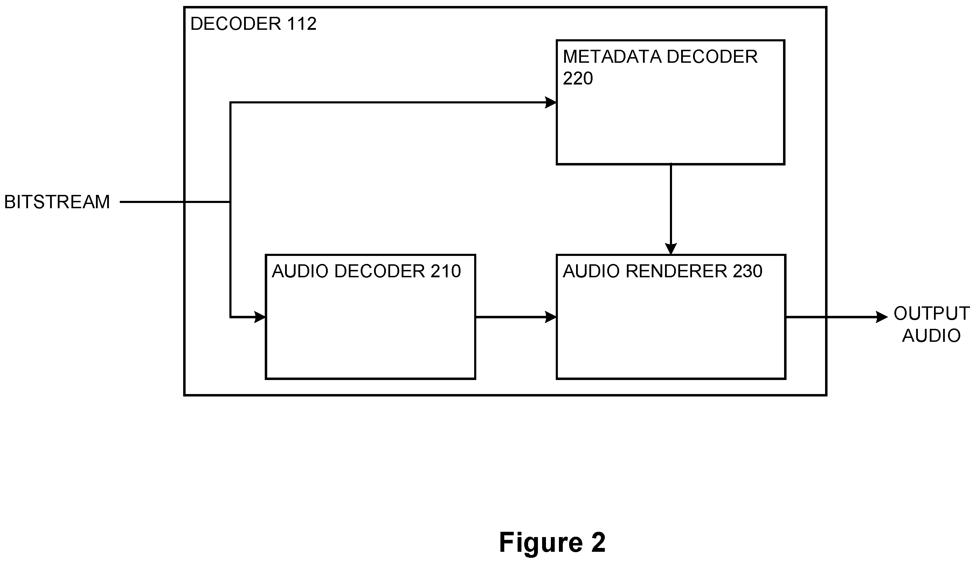

An embodiment of the decoder 112 is illustrated in **Figure 2**. The decoder 112 is configured to render a scene of an encoded audio object bitstream. The decoder 112 receives the encoded audio object bitstream to be decoded and feeds the relevant parts to the audio decoder 210 and the metadata decoder 220. The audio decoder 210 decodes audio from the encoded audio object bitstream and the metadata decoder decodes metadata parameters from the encoded audio object bitstream. The audio renderer 230 renders the audio scene using the decoded audio received from the audio decoder 210 and the decoded metadata parameters from the metadata decoder 220 and outputs the rendered audio.

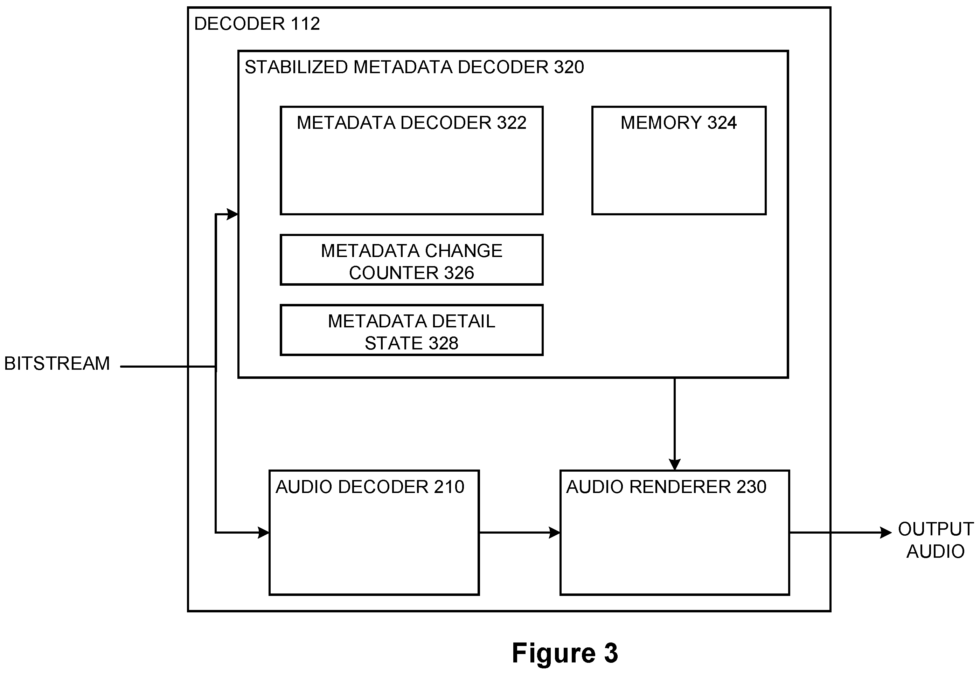

**Figure 3** illustrates another embodiment of decoder 112 that is configured to handle varying level of detail in the metadata, potentially as a result of varying bit rate. Turning to **Figure 3**, the encoded audio object bitstream is received by the decoder 112 and fed to the audio decoder 220 and the stabilized metadata decoder 320. The audio object bitstream is processed in time segments, commonly referred to as frames. Each input audio frame results in a corresponding bitstream frame, resulting in a rendered frame. The length of the frame may decide the update rate of the metadata parameters. The metadata can have more than one level of detail e.g., position with a predefined distance from the listener (basic metadata, also referred to as common metadata or level 1 metadata), and the combination of the basic metadata with a location with varying distance and source orientation (extended metadata, also referred to as level 2 metadata). The decoded metadata and the decoded audio file are then transferred to the audio renderer 230, which renders the audio file using the decoded audio file and decoded metadata. The rendered audio file is then provided as the resulting output audio.

The audio renderer 230 in the decoder 112 outputs decoded and rendered audio when decoder receives an encoded bitstream. The transmission may happen during varying channel conditions, which triggers the encoder to use a varying bit rate for the encoded bitstream. The information about the characteristics of the scene is carried via metadata which shapes the end user's experience. The decoder 112 may receive two levels of detail for the metadata. If the first level of detail is used, the basic metadata may describe the position in polar coordinates using the angles azimuth *θ* and elevation *ϕ*. Azimuth represents the position in the horizontal plane around the listener, and the elevation corresponds to the position in the vertical plane. The position of the source is defined using these angles, assuming a radius *r* of *r* = 1.0, which places the object at a one-unit distance from the origin. In this case the orientation of the source, described by the angles *yaw* and *pitch* are assumed to have the values, *yaw* = 0 and *pitch* = 0. Yaw defines the horizontal orientation of the source whereas pitch is used for the vertical orientation. In the level 1 detail of metadata, only the basic metadata decoder is active. If the second or extended level of metadata detail is used, the radius *r* and the orientation angles *yaw* and *pitch* are also decoded with extended metadata decoder. Note that the first level of detail, azimuth *θ* and elevation *ϕ* is a subset of the extended level of detail. The two metadata levels may be summarized as follows:

### Metadata levels

**1)** (azimuth *θ*, elevation *ϕ*)
**2)** (azimuth *θ*, elevation *ϕ*, radius *r*, yaw, pitch)

In the beginning of the decoding process, the metadata parameters for both levels of detail are initialized at default values and stored in the memory 324. A suitable set of default values may be: $\left\{\begin{matrix}θ = 0 \\ ϕ = 0 \\ r = 1 \\ yaw = 0 \\ pitch = 0\end{matrix}\right.$

The level of detail of metadata is stored in metadata detail state 328. It may be initialized to the level of detail of metadata of the first received frame, or it may be set to indicate an initial state. At startup, a counter 326 that keeps track of the number of received frames of the opposing level of detail is initialized to zero. The level 1 detail of metadata, also referred to as the basic metadata, is always encoded and decoded independent of the transmission conditions. If the encoding bit rate permits and the input data is available, this set may be extended to form the level 2 detail to provide an enhanced rendering of the audio scene. In the event of the changes in the transmission conditions, the metadata change counter 326 keeps track of the duration for such changes before updating the metadata detail state 328. The metadata change counter controls the status of the metadata detail state 328 and allows the updates in the metadata memory 324 accordingly. In this embodiment, the basic part of the metadata (level 1 detail) is decoded to be used in the rendering module 230. The decoding of basic parts is the same for the two levels of detail in metadata. In general, the strategy described herein to stabilize the metadata parameters may be applied on any subset of the metadata or on the entire set completely. In particular, if the metadata levels do not share any overlap, a partial decoding and application of the metadata would not be possible. In other words, the basic metadata does not change in resolution, and for that reason it is decoded and used in all frames without considering if the extended metadata is present or not. It should be noted that the principles described herein also apply for the case where the set of metadata parameters is the same in at least two levels of detail, where only the resolution of the parameters differ. Switching between resolutions of metadata parameters may result in abrupt changes in the rendered scene, which can be mitigated with the hysteresis logic described here.

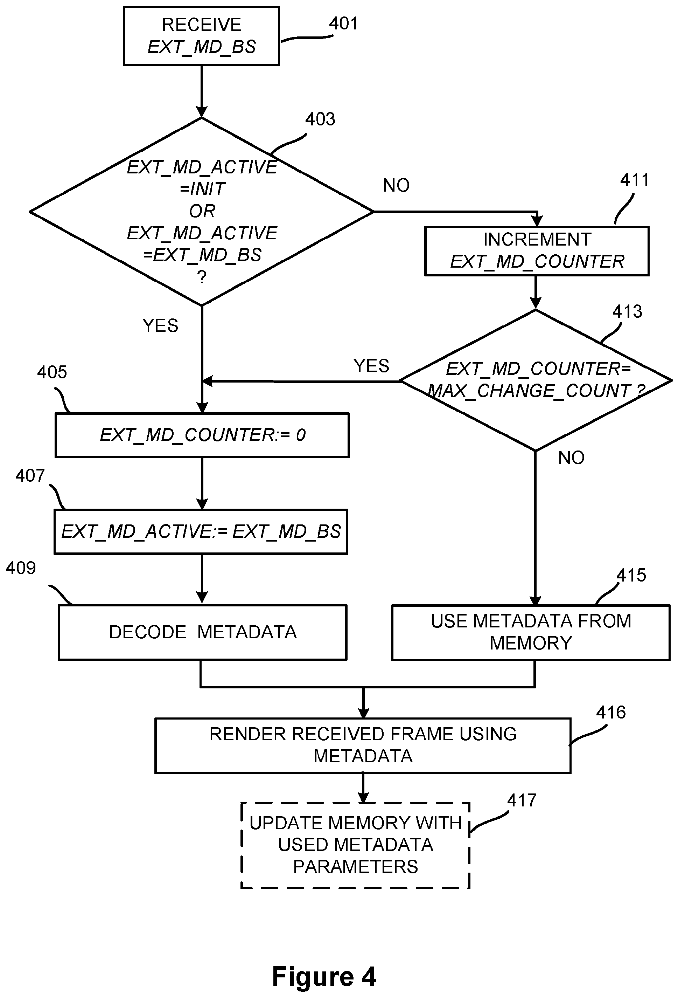

**Figure 4** is a flowchart illustrating operations decoder 112 performs using e.g., the stabilized metadata decoder 320. In step 401, the decoder 112 receives a frame of a metadata bitstream, the frame including a parameter EXT_MD_BS. The EXT_MD_BS parameter indicates a level of detail of metadata of the received frame. In some embodiments, the frame includes an EXT_MD_BS flag *EXT_MD_BS* ∈ {*TRUE*, *FALSE*} flag from a bitstream. The *EXT*_*MD*_*BS* flag indicates if the received metadata detail in the bitstream is level 2 (or higher) or not level 2 (or higher). In some embodiments, a true *EXT_MD_BS* flag indicates the received metadata detail is level 2 (or higher) and a false *EXT_MD_BS* indicates the received metadata is not level 2 (or higher) (i.e., is level 1). In other embodiments, a true *EXT_MD_BS* flag indicates the received metadata detail is not level 2 (or higher) and a false *EXT_MD_BS* indicates the received metadata is level 2 (or higher). In the description that follows, a true *EXT_MD_BS* flag indicates the received metadata detail is level 2 (or higher) and a false *EXT_MD_BS* indicates the received metadata is not level 2 (or higher).

In other words, it carries information about the level of detail in the bitstream metadata. For example, the level 2 detail metadata contains higher details of the scene and results in a different rendering operation. This extended format (level 2 detail) of metadata enables a richer end-user experience.

The metadata active state variable *EXT_MD_ACTIVE* ∈ *{INIT, TRUE, FALSE*} (illustrated in **Figure** 3 as metadata detail state 328) indicates whether the current metadata detail state is active. The value *INIT* is used for the first frame at the startup of the decoder, where no frame has been decoded. *TRUE* represents the level 2 detail of metadata (or higher) being active and *FALSE* represents the level 1 detail of metadata being active. These values may be represented using integer values, e.g., {-1,0,1} respectively. In other embodiments, *TRUE* represents the level 1 detail of metadata being active and *FALSE* represents the level 2 detail of metadata (or higher) being active. In the description that follows, *TRUE* represents the level 2 detail of metadata (or higher) being active and *FALSE* represents the level 1 detail of metadata being active.

In step 403, the decoder 112 reviews the value of *EXT*_*MD_ACTIVE* to determine if the received frame is the first frame (i.e., *EXT_MD_ACTIVE = INIT*) or if *EXT*_*MD_ACTIVE = EXT_MD_BS.* In other words, the decoder 112 determines if the received frame is the first frame (i.e., *EXT_MD_ACTIVE = INIT*) being decoded or if the received metadata detail state, *EXT_MD_BS,* is the same as a metadata level currently being used (i.e., *EXT_MD_ACTIVE = EXT_MD_BS*)*.*

If either one or both of these conditions are true, the decoder 112 sets the metadata change counter *EXT_MD_COUNTER* to zero in step 405 and sets the *EXT_MD_ACTIVE* (stored in metadata detail state 328) to the received metadata detail state, *EXT_MD_BS,* in step 407: $EXT _ MD _ ACTIVE : = EXT _ MD _ BS$ $EXT _ MD _ COUNTER : = 0$ where := indicates assignment.

The *EXT_MD_COUNTER* corresponds to counter for the number of frames since a change has occurred in the conditions and is illustrated in **Figure 3** as metadata change counter 326.

In step 409, the decoder 112 decodes the received metadata to be used as the obtained metadata. In case the level 1 metadata is a subset of the level 2 metadata, the level 1 metadata may be referred to as the basic metadata and the additional features of the level 2 metadata may be referred to as the extended metadata.

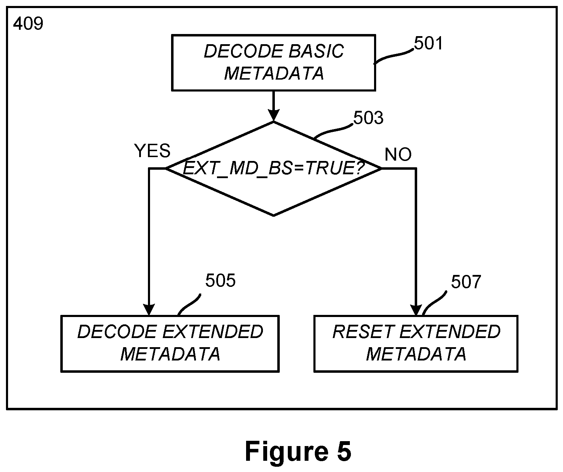

Brief reference is made to **Figure 5****,** which illustrates an embodiment of decoding metadata. Turning to **Figure 5****,** in step 501, the decoder 112 decodes the basic metadata to be used as a first part of the obtained metadata. In step 503, the decoder 112 determines whether or not the received metadata format (*EXT_MD_BS*) is *TRUE,* meaning extended metadata is included in the bitstream (e.g., Level 2 metadata). If the received metadata format (*EXT_MD_BS*) is *TRUE,* the decoder 112 decodes the extended metadata in step 505 to be used as a second part of the obtained metadata. This case in some embodiments corresponds to the encoding and decoding of level 2 detail metadata (extended metadata) without a change in the transmission conditions.

If the received metadata format (*EXT_MD_BS*) was not set (e. g. , *FALSE*), meaning the metadata received was basic metadata detail level while the value of the active metadata (metadata detail state) *EXT_MD_ACTIVE* was also *FALSE* (level 1), the decoder 112 in step 507 resets the extended metadata memory to their initial values. This operation enables that in the event of the level of detail for the current frame and the metadata detail state both being 1, the extended metadata memory is reset to its default values and used as the second part of the obtained metadata.

Returning to **Figure 4****,** if the *EXT_MD_ACTIVE* is not equal to *EXT_MD_BS* or *INIT* at step 403, it corresponds to the following frames after the initialization where the metadata detail state *EXT_MD_ACTIVE* is different from the received metadata detail level, *EXT_MD_BS.* This step allows the system to recognize the change in the conditions, in this case, the level of detail in the metadata of the received frame. This may be expressed as when the following condition is true, $\left(EXT_MD_ACTIVE\neq EXT_MD_BS\right) AND \left(EXT_MD_ACTIVE\neq INIT\right)$ the decoder 112 increments the *EXT_MD_COUNTER* by one in step 411.

Following the incrementation, the decoder 112 in step 413 compares *EXT_MD_COUNTER* to a threshold to see if the counter has reached to a maximum number of frame changes (over a designated period of time): $EXT _ MD _ COUNTER = MAX _ CHANGE _ FRAMES ?$

This condition ensures that for smaller periods of switches in the conditions, the settings from the last frames are preserved to avoid glitches. However, if the change is persistent for longer periods ( i.e., equals *MAX_CHANGE_FRAMES*), the change in the conditions become effective.

Thus, in step 413, if the *EXT_MD_COUNTER* reaches the threshold, meaning that the number of changes in the level of detail occurred over a pre-defined time window, the decoder 112 sets the *EXT_MD_COUNTER* to zero in step 405 and updates the metadata detail state with the current level of detail (e.g. metadata level 1 or metadata level 2 (or higher)) in step 407: $EXT _ MD _ ACTIVE : = EXT _ MD _ BS$ $EXT _ MD _ COUNTER : = 0$

In step 409, the decoder 112 decodes the received metadata to be used as the obtained metadata. In case the level 1 metadata is a subset of the level 2 metadata, the level 1 metadata may be referred to as the basic metadata and the additional features of the level 2 metadata may be referred to as the extended metadata and may be decoded as previously explained in steps illustrated in steps 501-507 of **Figure 5****.**

Otherwise, if the decoder 112 determines in step 413 that: $EXT _ MD _ COUNTER \neq MAX _ CHANGE _ FRAMES$ then the decoder 112 uses the metadata from the metadata memory in step 415.

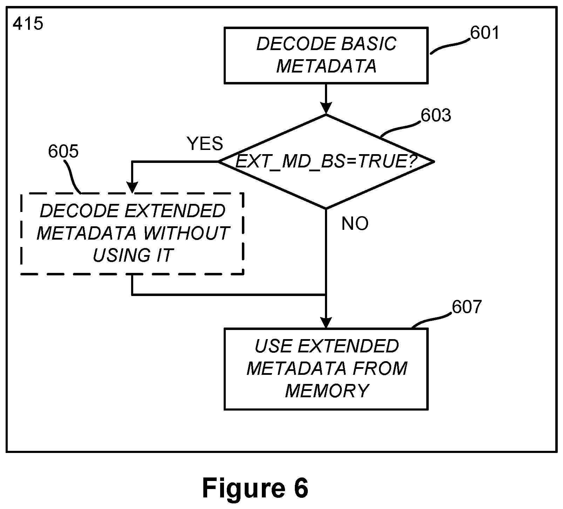

In case the level 1 metadata is a subset of the level 2 metadata, the additional features of the level 2 metadata may be referred to as the extended metadata. In this case, using the metadata from memory 415 can be further detailed as shown in **Figure 6****.** In step 601, the basic metadata is decoded as a first part of the obtained metadata. In step 603, the decoder 112 determines the level of detail of the received metadata by checking if *EXT_MD_BS* is set (e.g. set to *TRUE*)*.* If *EXT_MD_BS* is set, the extended metadata is present in the bitstream. It may be decoded without being used in step 605, as a method of keeping bitstream synchronization in the decoder. In step 607, the extended metadata from memory is used as a second part of the obtained metadata to form the obtained metadata to be used in the current frame. If the *EXT_MD_BS* is not set in step 603, the extended metadata is not present in the bitstream and the decoder 112 proceeds directly to step 607 where the extended metadata from memory is used, together with the decoded basic metadata to form the obtained metadata to be used in the current frame.

Returning to **Figure 4** step 415, this concludes the case where there has been a change in the conditions such as the level of detail for metadata. However, the change has only occurred for a short time window. Hence, the update on the metadata is withheld until the condition is stable for a period. As a result, the metadata from the metadata memory is used for rendering the current frame to avoid sudden switches.

Following steps 409 and 415, the obtained metadata from either step 409 or 415, is used to render received frame in step 416. The metadata used for rendering in the current frame is kept in memory 324 for processing subsequent frames. Keeping the memory updated may be done implicitly by addressing this memory when updating the metadata of the current frame. This is illustrated as an optional step 417.

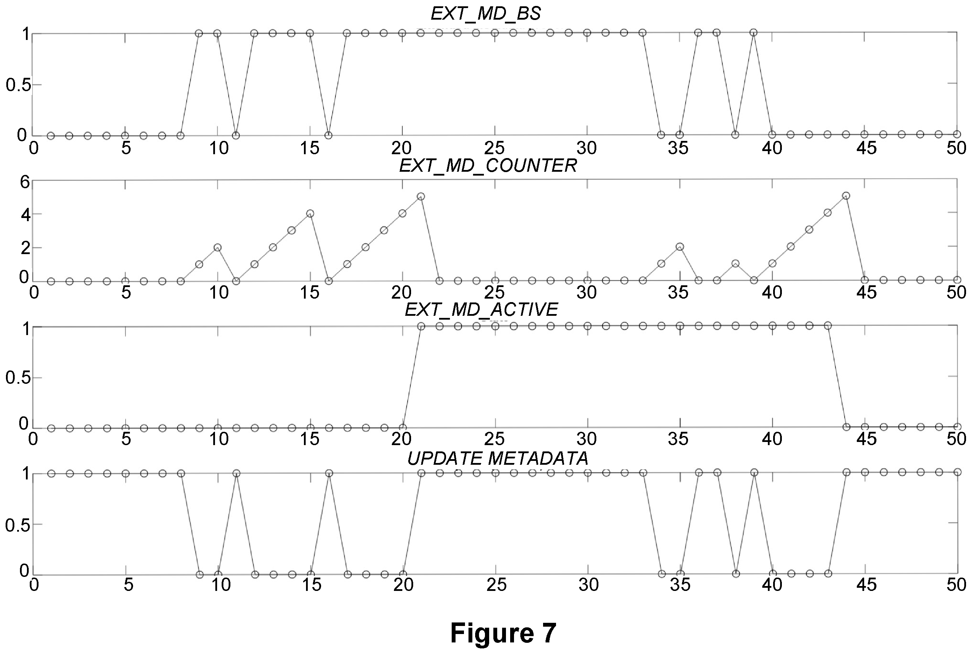

**Figure 7** illustrates an example case for the changes in the level of detail for metadata during transmission. In the top plot in **Figure 7**, the current level of detail in metadata from bitstream (*EXT_MD_BS*) is shown in y-axis through the transmission timeline in x-axis. The level '*1*' indicates an extended metadata format with radius, yaw, and pitch along with azimuth and elevation (corresponding to the level 2 metadata in the description above), whereas level '*0*' indicates the basic metadata format with only azimuth and elevation for the location of the sound objects (corresponding to the level 1 metadata in the description above).

In the second plot from the top in **Figure 7**, the value of the different detail counter, *EXT_MD_COUNTER*, counting the number of frames in the event of a change in conditions in the top plot is shown. If the counter reaches to a value of threshold, *MAX_CHANGE_FRAMES*, in this Figure presented as '*5*', the counter is reset to '*0*'.

The active metadata (also known as detail memory) is shown in the third plot from the top in **Figure 7** and represents *EXT_MD_ACTIVE*. In the initial frame, it is set to the value of the first plot, *EXT_MD_BS*. After that, whenever there is a change in conditions which can be tracked by the first plot, the counter in the second plot starts counting the number of frames during the change period. When the counter *EXT_MD_COUNTER* reaches the threshold *MAX_CHANGE_FRAMES*, the detail memory *EXT_MD_ACTIVE* in third plot is updated, set to the current level of detail *EXT_MD_BS* from the first plot.

The bottom plot in **Figure 7** corresponds to the updates in the extended metadata. The extended metadata consisting of yaw, pitch and radius are only updated when the counter is 'zero' meaning either there is no change in conditions, or the change has been effective more than a defined time window. In those cases, the memory of the extended metadata is updated with the received metadata in case of level 2 and with default values in case of level 1 detail.

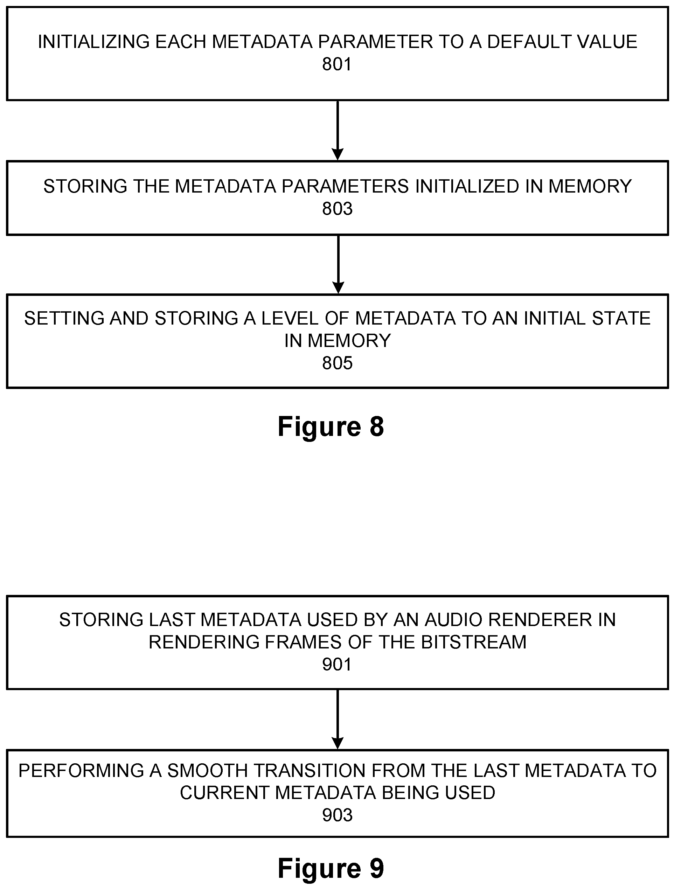

As previously indicated, at the beginning of the decoding process, the decoder 112 initializes metadata parameters for both levels of detail at default values and stores the initialized metadata parameters in the memory 324. This is illustrated in **Figure 8**. Turning to **Figure 8**, at a beginning of decoding the bitstream, the decoder 112, in step 801, initializes each metadata parameter to a default value.

In some embodiments, as described above, the decoder 112 initializes each metadata parameter by setting each metadata parameter in accordance with: $\left\{\begin{matrix}θ = 0 \\ ϕ = 0 \\ r = 1 \\ yaw = 0 \\ pitch = 0\end{matrix}\right.$ where *θ* is azimuth, *ϕ* is elevation, *r* is a radius from an origin, *yaw* is a horizontal orientation of a source, and *pitch* is a vertical orientation of the source.

In step 803, the decoder 112 stores the metadata parameters initialized in memory. In step 805, the decoder 112 sets and stores a level of metadata in *EXT_MD_ACTIVE* to an initial state.

Even with the stabilization described herein, there may be abrupt changes in the metadata that is input to the audio renderer 230. In an embodiment, the audio renderer is configured to even out abrupt changes in the scene description using a smoothing approach as opposed to allowing sudden jumps between frames. The smoothing can be enabled by including a memory of the last metadata in the audio renderer 230 and performing a smooth transition from the last to the current metadata. This smoothing may also be part of the stabilized metadata decoder 320. Further, it may be applied on a rendering parameter which is an intermediate step of the rendering, e.g., a gain parameter calculated from the orientation and distance of the audio object relative to the listener. This is illustrated in **Figure 9**, where in step 901, the decoder 112 stores last metadata used by an audio renderer in rendering frames of the bitstream, and in step 903, performs a smooth transition from the last metadata to current metadata being used.

In another exemplary embodiment, the encoded metadata has at least two levels of detail, where a parameter is present in all levels of detail but quantized with a different resolution. The changes between the resolution of the parameter may trigger unwanted artefacts and discontinuities in the rendering of the audio. The principles described above can be used to stabilize the used parameter and the rendering of the audio. The previous embodiment with detail levels having different number of metadata parameters can also be seen as different levels, where the lower level uses zero bits for encoding the non-present metadata parameters. For the zero-bit parameters, the default value is used. The default values can be seen as a codebook for decoding without any bits transmitted for these parameters.

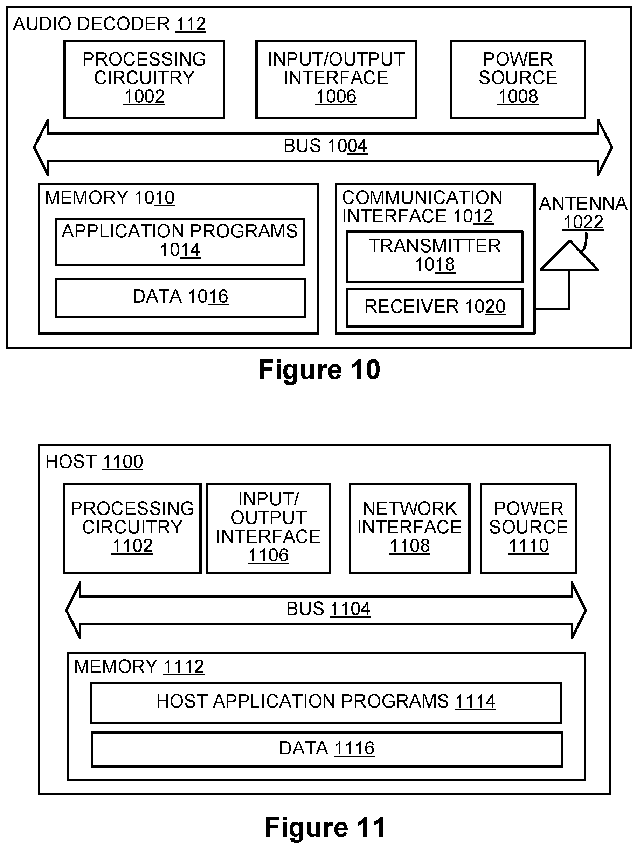

**Figure 10** shows an audio decoder 112 (e.g., a decoder) in accordance with some embodiments where the audio decoder 112 is implemented as a stand-alone device. As used herein, an audio object renderer refers to a device capable, configured, arranged and/or operable to decode encoded objects and communicate with network nodes, encoders, and/or decoders. Examples of an audio object renderer include, but are not limited to, a smart phone, mobile phone, cell phone, voice over IP (VoIP) phone, wireless local loop phone, desktop computer, personal digital assistant (PDA), wireless cameras, gaming console or device, storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc.

An audio decoder 112 may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a decoder may not necessarily have a user in the sense of a human user who owns and/or operates the relevant device.

The audio decoder 112 includes processing circuitry 1002 that is operatively coupled via a bus 1004 to an input/output interface 1006, a power source 1008, a memory 1010, a communication interface 1012, and/or any other component, or any combination thereof. Certain decoders may utilize all or a subset of the components shown in **Figure 10**. The level of integration between the components may vary from one decoder to another decoder. Further, certain decoders may contain multiple instances of a component, such as multiple processors, memories, transceivers, transmitters, receivers, etc.

The processing circuitry 1002 is configured to process instructions and data and may be configured to implement any sequential state machine operative to execute instructions stored as machine-readable computer programs in the memory 1010. The processing circuitry 1002 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1002 may include multiple central processing units (CPUs).

In the example, the input/output interface 1006 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the audio decoder 112. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1008 is structured as a battery or battery pack. Other types of power sources, such as an external power source (e.g., an electricity outlet), photovoltaic device, or power cell, may be used. The power source 1008 may further include power circuitry for delivering power from the power source 1008 itself, and/or an external power source, to the various parts of the audio decoder 112 via input circuitry or an interface such as an electrical power cable. Delivering power may be, for example, for charging of the power source 1008. Power circuitry may perform any formatting, converting, or other modification to the power from the power source 1008 to make the power suitable for the respective components of the audio decoder 112 to which power is supplied.

The memory 1010 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1010 includes one or more application programs 1014, such as an operating system, web browser application, a widget, gadget engine, or other application, and corresponding data 1016. The memory 1010 may store, for use by the audio decoder 112, any of a variety of various operating systems or combinations of operating systems.

The memory 1010 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1010 may allow the audio decoder 112 to access instructions, application programs and the like, stored on transitory or non-transitory memory media, to off-load data, or to upload data. An article of manufacture, such as one utilizing a communication system may be tangibly embodied as or in the memory 1010, which may be or comprise a device-readable storage medium.

The processing circuitry 1002 may be configured to communicate with an access network or other network using the communication interface 1012. The communication interface 1012 may comprise one or more communication subsystems and may include or be communicatively coupled to an antenna 1022. The communication interface 1012 may include one or more transceivers used to communicate, such as by communicating with one or more remote transceivers of another device capable of wireless communication (e.g., another UE or a network node in an access network). Each transceiver may include a transmitter 1018 and/or a receiver 1020 appropriate to provide network communications (e.g., optical, electrical, frequency allocations, and so forth). Moreover, the transmitter 1018 and receiver 1020 may be coupled to one or more antennas (e.g., antenna 1022) and may share circuit components, software or firmware, or alternatively be implemented separately.

In the illustrated embodiment, communication functions of the communication interface 1012 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, an audio object renderer may provide an output of decoded data, through its communication interface 1012, via a wireless connection to a network node.

An audio decoder when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a thermostat, an electrical door lock, a connected doorbell, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement. A decoder in the form of an IoT device comprises circuitry and/or software in dependence of the intended application of the IoT device in addition to other components as described in relation to the audio decoder 112 shown in **Figure 10**.

**Figure 11** is a block diagram of a host 1100 in accordance with various aspects described herein. As used herein, the host 1100 may be or comprise various combinations hardware and/or software, including a standalone server, a blade server, a cloud-implemented server, a distributed server, a virtual machine, container, or processing resources in a server farm. The host 1100 may provide one or more services to one or more encoders and/or decoders and one or more UEs.

The host 1100 includes processing circuitry 1102 that is operatively coupled via a bus 1104 to an input/output interface 1106, a network interface 1108, a power source 1110, and a memory 1112. Other components may be included in other embodiments. Features of these components may be substantially similar to those described with respect to the devices of previous figures, such as **Figure 10**, such that the descriptions thereof are generally applicable to the corresponding components of host 1100.

The memory 1112 may include one or more computer programs including one or more host application programs 1114 and data 1116, which may include user data, e.g., data generated by a UE for the host 1100 or data generated by the host 1100 for a UE. Embodiments of the host 1000 may utilize only a subset or all of the components shown. The host application programs 1114 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1114 may also provide for user authentication and licensing checks and may periodically report health, routes, and content availability to a central node, such as a device in or on the edge of a core network. Accordingly, the host 1100 may select and/or indicate a different host for over-the-top services for an encoder or a decoder. The host application programs 1114 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

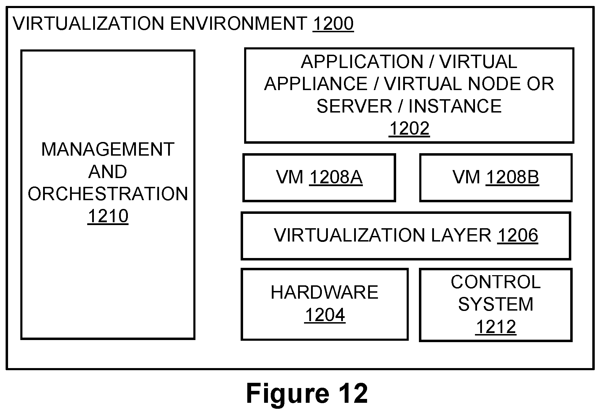

**Figure 12** is a block diagram illustrating a virtualization environment 1200 in which functions implemented by some embodiments of the audio decoder 112 or components of the audio decoder 112 may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1200 hosted by one or more of hardware nodes, such as a hardware computing device that operates as a decoder, encoder, network node, UE, core network node, or host. Further, in embodiments in which the virtual node does not require radio connectivity (e.g., a core network node or host), then the node may be entirely virtualized.

Applications 1202 (which may alternatively be called software instances, virtual appliances, network functions, virtual nodes, virtual network functions, etc.) are run in the virtualization environment 1200 to implement some of the features, functions, and/or benefits of some of the embodiments disclosed herein.

Hardware 1204 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1206 (also referred to as hypervisors or virtual machine monitors (VMMs)), provide VMs 1208A and 1208B (one or more of which may be generally referred to as VMs 1208), and/or perform any of the functions, features and/or benefits described in relation with some embodiments described herein. The virtualization layer 1206 may present a virtual operating platform that appears like networking hardware to the VMs 1208.

The VMs 1208 comprise virtual processing, virtual memory, virtual networking or interface and virtual storage, and may be run by a corresponding virtualization layer 1206. Different embodiments of the instance of a virtual appliance 1202 may be implemented on one or more of VMs 1208, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1208 may be a software implementation of a physical machine that runs programs as if they were executing on a physical, non-virtualized machine. Each of the VMs 1208, and that part of hardware 1204 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1108 on top of the hardware 1204 and corresponds to the application 1202.

Hardware 1204 may be implemented in a standalone network node with generic or specific components. Hardware 1204 may implement some functions via virtualization. Alternatively, hardware 1204 may be part of a larger cluster of hardware (e.g., such as in a data center or CPE) where many hardware nodes work together and are managed via management and orchestration 1210, which, among others, oversees lifecycle management of applications 1202. In some embodiments, hardware 1204 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1212 which may alternatively be used for communication between hardware nodes and radio units.

Although the computing devices described herein (e.g., decoders, audio object renderers, encoders, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device but are enjoyed by the computing device as a whole, and/or by end users and a wireless network generally.

### EMBODIMENTS

Embodiment 1. A method performed by a decoder (112, 1102) to decode a bitstream, the method comprising:
   receiving (401) a frame of a metadata bitstream, the frame including a parameter EXT_MD_BS, the EXT_MD_BS parameter indicating a level of detail of metadata of the received frame;
   determining (403) whether a metadata active state variable, EXT_MD_ACTIVE, state is set to an initial state or is set to the level of detail of metadata of the received frame;
   responsive to determining that the EXT_MD_ACTIVE state is not set to the initial state and is not set to the level of detail of metadata of the received frame:
      incrementing (411) a metadata change counter, EXT_MD_COUNTER;
      determining (413) whether or not the EXT_MD_COUNTER equals a maximum change count;
      responsive to the EXT_MD_COUNTER not equaling the maximum change count, using (415) metadata from memory for rendering the received frame;
      responsive to the EXT_MD_COUNTER equaling the maximum change count:
         setting (405) the EXT_MD_COUNTER to zero;
         setting (407) the EXT_MD_ACTIVE state to the level of detail of metadata of the received frame; and
         decoding and using (409) the metadata of the received frame to use in rendering the received frame.
Embodiment 2. The method of Embodiment 1, further comprising:
   responsive to determining that the EXT_MD_ACTIVE state is set to the initial state or is set to the metadata level of detail of the received frame:
   setting (405) the EXT_MD_COUNTER to zero;
   setting (407) the EXT_MD_ACTIVE state to the metadata level of the received frame;
   decoding and using (409) the received metadata of the received frame in rendering the received frame.
Embodiment 3. The method of any of Embodiments 1-2, wherein decoding and the received metadata comprises:
   responsive to an EXT_MD_BS flag being true (503), decoding and using (505) the metadata of the received frame in rendering the received frame;
   responsive to the EXT_MD_BS flag not being true (507), decoding level 1 metadata to use in rendering the received frame and resetting the metadata to use in rendering the received frame; and
   rendering (416) the received frame using the metadata determined based on the EXT_MD_BS flag.
Embodiment 4. The method of any of Embodiments 1-3, further comprising:
   when the metadata has been determined to be used for rendering the received frame:
   storing (417) the metadata in memory for decoding and rendering subsequent frames.
Embodiment 5. The method of any of Embodiments 1-4, further comprising:
   at a beginning of decoding the bitstream:
   initializing (801) each metadata parameter in level 1 metadata level and level 2 metadata to a default value; and
   storing (803) the metadata parameters initialized in memory.
Embodiment 6. The method of Embodiment 5, wherein initializing each metadata parameter comprises setting each metadata parameter in accordance with: $\left\{\begin{matrix}θ = 0 \\ ϕ = 0 \\ r = 1 \\ yaw = 0 \\ pitch = 0\end{matrix}\right.$ where *θ* is azimuth, *ϕ* is elevation, *r* is a radius from an origin, *yaw* is a horizontal orientation of a source, and *pitch* is a vertical orientation of the source.
Embodiment 7. The method of any of Embodiments 1-6, further comprising:
   setting (705) and storing a level of detail of metadata in EXT_MD_ACTIVE to an initial state.
Embodiment 8. The method of any of Embodiments 1-7 wherein the maximum change count comprises a maximum change count over a period of time.
Embodiment 9. The method of Embodiment 8 wherein the maximum change count comprises a change count of 5 over the period of time.
Embodiment 10. The method of any of Embodiments 1-8, further comprising:
   storing (901) last metadata used by an audio renderer in rendering frames of the bitstream; and
   performing (903) a smooth transition from the last metadata to current metadata being used.
Embodiment 11. The method of Embodiment 10, wherein performing the smooth transition comprises applying the smoothing transition of a rendering parameter that is an intermediate step of rendering.
Embodiment 12. The method of Embodiment 11, wherein the rendering parameter comprises a gain parameter calculated from an orientation and distance of an audio object relative to a listener.
Embodiment 13. A decoder (112, 1102) adapted to perform operations comprising:
   receiving (401) a frame of a metadata bitstream, the frame including a parameter EXT_MD_BS, the EXT_MD_BS parameter indicating a level of detail of metadata of the received frame;
   determining (403) whether a metadata active state variable, EXT_MD_ACTIVE, state is set to an initial state or is set to the level of detail of metadata of the received frame;
   responsive to determining that the EXT_MD_ACTIVE state is not set to the initial state and is not set to the level of detail of metadata of the received frame:
      incrementing (411) a metadata change counter, EXT_MD_COUNTER;
      determining (413) whether or not the EXT_MD_COUNTER equals a maximum change count;
      responsive to the EXT_MD_COUNTER not equaling the maximum change count, using (415) metadata from memory to use for rendering the received frame;
      responsive to the EXT_MD_COUNTER equaling the maximum change count:
         setting (405) the EXT_MD_COUNTER to zero;
         setting (407) the EXT_MD_ACTIVE state to the level of detail of metadata of the received frame; and
         decoding and using (409) the metadata of the received frame to use in rendering the received frame.
Embodiment 14. The decoder (112, 1102) of Embodiment 13, wherein the decoder (112, 1102) is further adapted to perform operations comprising:
   responsive to determining that the EXT_MD_ACTIVE state is set to the initial state or is set to the metadata level of detail of the received frame:
   setting (405) the EXT_MD_COUNTER to zero;
   setting (407) the EXT_MD_ACTIVE state to the metadata level of the received frame;
   decoding and using (409) the received metadata of the received frame to use in rendering the received frame.
Embodiment 15. The decoder (112, 1102) of any of Embodiments 13-14, wherein decoding and use the received metadata comprises:
   responsive to an EXT_MD_BS flag being true (503), decoding and using (505) the metadata of the received frame to use in rendering the received frame;
   responsive to the EXT_MD_BS flag not being true (507), decoding level 1 metadata to use in rendering the received frame and resetting the metadata to use in rendering the received frame; and
   rendering (416) the received frame using the metadata determined based on the EXT_MD_BS flag.
Embodiment 16. The decoder (112, 1102) of any of Embodiments 13-15, wherein the decoder (112, 1102) is further adapted to perform operations comprising:
   when the metadata has been determined to be used for rendering the received frame:
   storing (417) the metadata in memory for decoding and rendering subsequent frames.
Embodiment 17. The decoder (112, 1102) of any of Embodiments 13-16, wherein the decoder (112, 1102) is further adapted to perform operations comprising:
   at a beginning of decoding the bitstream:
   initializing (801) each metadata parameter in level 1 metadata level and level 2 metadata to a default value; and
   storing (803) the metadata parameters initialized in memory.
Embodiment 18. The method of Embodiment 17, wherein initializing each metadata parameter comprises setting each metadata parameter in accordance with: $\left\{\begin{matrix}θ = 0 \\ ϕ = 0 \\ r = 1 \\ yaw = 0 \\ pitch = 0\end{matrix}\right.$ where *θ* is azimuth, *ϕ* is elevation, *r* is a radius from an origin, *yaw* is a horizontal orientation of a source, and *pitch* is a vertical orientation of the source.
Embodiment 19. The decoder (112, 1102) of any of Embodiments 13-18, wherein the decoder (112, 1102) is further adapted to perform operations comprising:
   setting (805) and storing a level of detail of metadata in EXT_MD_ACTIVE to an initial state.
Embodiment 20. The decoder (112, 1102) of any of Embodiments 13-19 wherein the maximum change count comprises a maximum change count over a period of time.
Embodiment 21. The decoder (112, 1102) of Embodiment 20 wherein the maximum change count comprises a change count of 5 over the period of time.
Embodiment 22. The decoder (112, 1102) of any of Embodiments 13-21, wherein the decoder (112, 1102) is further adapted to perform operations comprising:
   storing (901) last metadata used by an audio renderer in rendering frames of the bitstream; and
   performing (903) a smooth transition from the last metadata to current metadata being used.
Embodiment 23. The decoder (112, 1102) of Embodiment 22, wherein performing the smooth transition comprises applying the smoothing transition of a rendering parameter that is an intermediate step of rendering.
Embodiment 24. The decoder (112, 1102) of Embodiment 23, wherein the rendering parameter comprises a gain parameter calculated from an orientation and distance of an audio object relative to a listener.
Embodiment 25. A decoder (112, 1102) comprising:
   processing circuitry (802); and
   memory (801) coupled with the processing circuitry, wherein the memory includes instructions that when executed by the processing circuitry causes the decoder (112, 1102) to perform operations comprising:
      receiving (401) a frame of a metadata bitstream, the frame including a parameter EXT_MD_BS, the EXT_MD_BS parameter indicating a level of detail of metadata of the received frame;
      determining (403) whether a metadata active state variable, EXT_MD_ACTIVE, state is set to an initial state or is set to the level of detail of metadata of the received frame;
      responsive to determining that the EXT_MD_ACTIVE state is not set to the initial state and is not set to the level of detail of metadata of the received frame:
         incrementing (411) a metadata change counter, EXT_MD_COUNTER;
         determining (413) whether or not the EXT_MD_COUNTER equals a maximum change count;
         responsive to the EXT_MD_COUNTER not equaling the maximum change count, using (415) metadata from memory to use for rendering the received frame;
         responsive to the EXT_MD_COUNTER equaling the maximum change count:
            setting (405) the EXT_MD_COUNTER to zero;
            setting (407) the EXT_MD_ACTIVE state to the level of detail of metadata of the received frame; and
            decoding and using (409) the metadata of the received frame to use in rendering the received frame.
Embodiment 26. The decoder (112, 1102) of Embodiment 25, wherein the memory includes further instructions that when executed by the processing circuitry causes the decoder (112, 1102) to perform further operations comprising:
   responsive to determining that the EXT_MD_ACTIVE state is set to the initial state or is set to the metadata level of detail of the received frame:
   setting (405) the EXT_MD_COUNTER to zero;
   setting (407) the EXT_MD_ACTIVE state to the metadata level of the received frame;
   decoding and using (409) the received metadata of the received frame to use in rendering the received frame.
Embodiment 27. The decoder (112, 1102) of any of Embodiments 25-26, wherein decoding and use the received metadata comprises:
   responsive to an EXT_MD_BS flag being true (503), decoding and using (505) the metadata of the received frame to use in rendering the received frame;
   responsive to the EXT_MD_BS flag not being true (507), decoding level 1 metadata to use in rendering the received frame and resetting the metadata to use in rendering the received frame; and
   rendering (507) the received frame using the metadata determined based on the EXT_MD_BS flag.
Embodiment 28. The decoder (112, 1102) of any of Embodiments 25-27, wherein the memory includes further instructions that when executed by the processing circuitry causes the decoder (112, 1102) to perform further operations comprising:
   when the metadata has been determined to be used for rendering the received frame:
   storing (417) the metadata in memory for decoding and rendering subsequent frames.
Embodiment 29. The decoder (112, 1102) of any of Embodiments 25-28, wherein the memory includes further instructions that when executed by the processing circuitry causes the decoder (112, 1102) to perform further operations comprising:
   at a beginning of decoding the bitstream:
   initializing (801) each metadata parameter in level 1 metadata level and level 2 metadata to a default value; and
   storing (803) the metadata parameters initialized in memory.
Embodiment 30. The method of Embodiment 29, wherein initializing each metadata parameter comprises setting each metadata parameter in accordance with: $\left\{\begin{matrix}θ = 0 \\ ϕ = 0 \\ r = 1 \\ yaw = 0 \\ pitch = 0\end{matrix}\right.$ where *θ* is azimuth, *ϕ* is elevation, *r* is a radius from an origin, *yaw* is a horizontal orientation of a source, and *pitch* is a vertical orientation of the source.
Embodiment 31. The decoder (112, 1102) of any of Embodiments 25-30, wherein the memory includes further instructions that when executed by the processing circuitry causes the decoder (112, 1102) to perform further operations comprising:
   setting (805) and storing a level of detail of metadata in EXT_MD_ACTIVE to an initial state.
Embodiment 32. The decoder (112, 1102) of any of Embodiments 25-31 wherein the maximum change count comprises a maximum change count over a period of time.
Embodiment 33. The decoder (112, 1102) of Embodiment 32 wherein the maximum change count comprises a change count of 5 over the period of time.
Embodiment 34. The decoder (112, 1102) of any of Embodiments 25-33, wherein the memory includes further instructions that when executed by the processing circuitry causes the decoder (112, 1102) to perform further operations comprising:
   storing (901) last metadata used by an audio renderer in rendering frames of the bitstream; and
   performing (903) a smooth transition from the last metadata to current metadata being used.
Embodiment 35. The decoder (112, 1102) of Embodiment 34, wherein performing the smooth transition comprises applying the smoothing transition of a rendering parameter that is an intermediate step of rendering.
Embodiment 36. The decoder (112, 1102) of Embodiment 35, wherein the rendering parameter comprises a gain parameter calculated from an orientation and distance of an audio object relative to a listener.
Embodiment 37. A computer program comprising program code to be executed by processing circuitry (802) of a decoder (112, 1102), whereby execution of the program code causes the decoder (112, 1102) to perform operations according to any of Embodiments 1-12.
Embodiment 38. A computer program product comprising a non-transitory storage medium including program code to be executed by processing circuitry (802) of a decoder (112, 1102), whereby execution of the program code causes the decoder (112, 1102) to perform operations according to any of Embodiments 1-12.

## Claims

1. A method of decoding encoded metadata received in a bitstream, wherein the metadata has one of a first level of detail comprising common metadata and a second level of detail comprising extended metadata, the common metadata being a subset of the extended metadata, the method comprising:
receiving (401) in the bitstream a first parameter indicating a level of detail of the received metadata for a current frame;
responsive to a metadata active state variable not being set to an initial state and not being set to the level of detail indicated by the first parameter, incrementing (411) a metadata change counter;
responsive to the incremented metadata change counter not having reached (413) a threshold,
using (415) metadata from a memory as the metadata to be used in rendering the current frame; and
responsive to the incremented metadata change counter having reached (413) the threshold,
setting (405) the metadata change counter to zero, setting (407) the metadata active state variable to the level of detail indicated by the first parameter, and decoding (409) metadata for the current frame in accordance with the level of detail indicated by the first parameter as the metadata to be used in rendering the current frame.

2. The method of claim 1, further comprising, responsive to the metadata active state variable being set to the initial state or being set to the level of detail indicated by the first parameter:
setting (405) the metadata change counter to zero;
setting (407) the metadata active state variable to the level of detail indicated by the first parameter; and
decoding (409) metadata for the current frame in accordance with the level of detail indicated by the first parameter as the metadata to be used in rendering the current frame.

3. The method of claim 1 or 2, wherein the common metadata comprises an azimuth θ and an elevation ϕ of a source, and wherein the extended metadata further comprises a radius r, a yaw and a pitch of the source.

4. The method of any of claims 1 to 3, wherein the first parameter is set to indicate that extended metadata is included in the bitstream for the current frame.

5. The method of any of claims 1 to 4, further comprising storing (417) the metadata to be used in rendering the current frame in the memory for decoding and rendering subsequent frames.

6. The method of any of claims 1 to 5, wherein the extended metadata stored in the memory is updated when the metadata change counter is zero, the extended metadata stored in the memory being updated with extended metadata decoded from the bitstream for the current frame when the first parameter indicates the second level of detail and with default values of the extended metadata when the first parameter indicates the first level of detail.

7. The method of any of claims 3 to 6, further comprising, at a beginning of decoding the bitstream, initializing each metadata parameter of the common metadata and of the extended metadata to a default value, where azimuth *θ* = 0, elevation *ϕ* = 0, radius *r* = 1, yaw = 0 and pitch = 0.

8. The method of any of claims 1 to 7, further comprising outputting the metadata to be used in rendering the current frame to an audio renderer for rendering the current frame.

9. The method of any of claims 1 to 8, wherein the bitstream further includes an encoded audio object, and the method further comprises decoding the audio object from the bitstream.

10. The method of claim 9, further comprising rendering (416) the current frame using the decoded audio object and the metadata to be used in rendering the current frame.
